# EUROPEAN PATENT APPLICATION

(11) **EP 4 509 364 A1**
(43) Date of publication of application: **19.02.2025**
(21) Application number: 22952643.9
(22) Date of filing: 18.08.2022
(51) Int. Cl.: B60Q 3/80

(54) **NODE ADDRESS ALLOCATION METHOD AND APPARATUS FOR VEHICLE, AND VEHICLE DEVICE AND STORAGE MEDIUM**

(30) Priority: 27.07.2022 CN 202210896197
(71) Applicant: Zhejiang Geely Holding Group Co., Ltd., Hangzhou, Zhejiang 310051 (CN); Geely Automobile Research Institute (Ningbo) Co., Ltd, Ningbo, Zhejiang 315336 (CN)
(72) Inventor: DONG, Wuhao, Hangzhou, Zhejiang 310051 (CN); LIU, Kun, Hangzhou, Zhejiang 310051 (CN); WU, Jiangcai, Hangzhou, Zhejiang 310051 (CN); KANG, Zhiwen, Hangzhou, Zhejiang 310051 (CN)
(74) Representative: Range, Christopher William
(86) International application number: PCT/CN2022/113386
(87) International publication number: WO 2024/021201

(57) **Abstract**

Provided are a node address allocation method and apparatus for a vehicle, a vehicle, a device, and a storage medium. The node address allocation method for a vehicle includes: obtaining (S101), from a node set based on a first addressing mode, a node to which an address is currently to be allocated, the node set including a plurality of nodes connected to a first bus of the vehicle; obtaining (S102) an address of the node based on a quantity of addressing instruction frames in an addressing instruction sequence, an address carried by an addressing instruction frame currently issued to the node, and a frame quantity of the addressing instruction frame currently issued to the node; and performing (S103) address allocation on the node based on the address of the node. Through node allocation in the solution, the address allocation on the node can be accurately controlled, and thus predetermined requirements can be met.

## Description

### FIELD

The present disclosure relates to the vehicle field, and more particularly, to a node address allocation method and apparatus for a vehicle, a vehicle, a device, and a storage medium.

### BACKGROUND

A configuration rate of vehicle interior ambient lights in family cars is increasing day by day, and use of multi-color RGB ambient lights is becoming more and more common. To highlight atmosphere of a whole vehicle, a quantity of ambient lights arranged in the car is also gradually increasing. To realize separate control of ambient lights at different parts, it is necessary to allocate an address to each ambient light. Then each ambient light can be individually controlled based on the address of the ambient light.

In the related art, due to differences in chip types used in the ambient lights, there are also differences in address allocation means of the ambient lights, i.e., addressing principles of node addressing methods. For example, node address results obtained by using MLX 81 series chips are not the same as those obtained by using Indie Realplum chips. Therefore, compatibility of node control schemes cannot be realized. Therefore, in terms of existing solutions, a plurality of solutions needs to be developed to adapt to addressing methods of different chips. Otherwise, accurate control of requirements cannot be achieved.

### SUMMARY

In view of the aforementioned defects or shortcomings in the related art, a node address allocation method and apparatus for a vehicle, a vehicle, a device, and a storage medium are expected.

In a first aspect, the present disclosure provides a node address allocation method for a vehicle, including: obtaining, from a node set based on a first addressing mode, a node to which an address is currently to be allocated, the node set including a plurality of nodes connected to a first bus of the vehicle; obtaining an address of the node based on a quantity of addressing instruction frames in an addressing instruction sequence, an address carried by an addressing instruction frame currently issued to the node, and a frame quantity of the addressing instruction frame currently issued to the node; and performing address allocation on the node based on the address of the node.

Further, the obtaining, from the node set based on the first addressing mode, the node to which the address is currently to be allocated includes: performing a node lookup sequentially from a head node to a tail node in the node set, and in response to finding a first to-be-processed node for which the address allocation has not been performed, determining the to-be-processed node as the node to which the address is currently to be allocated; or, performing the node lookup sequentially from the tail node to the head node in the node set, and in response to finding the first to-be-processed node for which the address allocation has not been performed, determining the to-be-processed node as the node to which the address is currently to be allocated.

In an exemplary embodiment of the present disclosure, the first addressing mode is one of an LSM addressing mode or a BSM addressing mode.

In some embodiments, the obtaining the address of the node based on the quantity of addressing instruction frames in the addressing instruction sequence, the address carried by the addressing instruction frame currently issued to the node, and the frame quantity of the addressing instruction frame currently issued to the node includes: obtaining a first difference between the quantity of addressing instruction frames in the addressing instruction sequence and the frame quantity of the addressing instruction frame currently issued to the node; obtaining a second difference between the address carried by the addressing instruction frame currently issued to the node and the first difference; and obtaining the address of the node based on the second difference.

Further, the node address allocation method further includes: obtaining, from the node set based on a second addressing mode, the node to which the address is currently to be allocated; obtaining the address of the node based on the address carried by the addressing instruction frame currently issued to the node in the addressing instruction sequence; and performing the address allocation on the node based on the address of the node.

In an exemplary embodiment of the present disclosure, the second addressing mode is one of an LSM addressing mode or a BSM addressing mode, and the second addressing mode is different from the first addressing mode.

In a second aspect, the present disclosure provides a node address allocation apparatus for a vehicle. The apparatus includes: a node determination module configured to obtain, from a node set based on a first addressing mode, a node to which an address is currently to be allocated, the node set including a plurality of nodes connected to a first bus of the vehicle; an address determination module configured to obtain an address of the node based on a quantity of addressing instruction frames in an addressing instruction sequence, an address carried by an addressing instruction frame currently issued to the node, and a frame quantity of the addressing instruction frame currently issued to the node; and an allocation module configured to perform address allocation on the node based on the address of the node.

Further, the address determination module is specifically configured to: obtain a first difference between a quantity of addressing instruction frames in the addressing instruction sequence and the frame quantity of the addressing instruction frame currently issued to the node; obtain a second difference between the address carried by the addressing instruction frame currently issued to the node and the first difference; and obtain the address of the node based on the second difference.

In a third aspect, the present disclosure provides a vehicle including the node address allocation apparatus for the vehicle.

In a fourth aspect, the present disclosure provides an electronic device including a memory; a processor; and a computer program stored on the memory and executable on the processor. The processor is configured to, when executing the program, implement the node address allocation method for the vehicle according to any one of embodiments in the present disclosure.

In a fifth aspect, the present disclosure provides a computer-readable storage medium having a computer program stored thereon. The program is configured to, when executed by a processor, implement the node address allocation method for the vehicle according to any one of the embodiments in the present disclosure.

In summary, with the node address allocation method and apparatus for the vehicle, the vehicle, the device, and the storage medium according to the present disclosure, the address of the node is obtained by obtaining the quantity of addressing instruction frames in an addressing instruction sequence, the address carried by the addressing instruction frame currently issued to the node, and the frame quantity of the addressing instruction frame currently issued to the node. This method can realize accurate control on the node address allocation, meeting predetermined requirements.

### BRIEF DESCRIPTION OF THE DRAWINGS

Other features, objects, and advantages of the present disclosure will become more apparent by reading the detailed description of non-limiting embodiments made with reference to the following accompanying drawings.
FIG. 1 is a flowchart illustrating a node address allocation method for a vehicle according to an embodiment of the present disclosure.
FIG. 2 is an internal structure diagram of an MLX81 series chip for nodes according to an embodiment of the present disclosure.
FIG. 3 is a node connection block diagram in a BSM addressing mode according to an embodiment of the present disclosure.
FIG. 4 is an addressing result in a BSM addressing mode according to an embodiment of the present disclosure.
FIG. 5 is an internal structure diagram of an Indie Realplum chip for nodes according to an embodiment of the present disclosure.
FIG. 6 is a node connection block diagram in an LSM addressing mode according to an embodiment of the present disclosure.
FIG. 7 is an addressing result in a LSM addressing mode according to an embodiment of the present disclosure.
FIG. 8 is a block diagram showing a structure of a node address allocation apparatus for a vehicle according to an embodiment of the present disclosure.
FIG. 9 is an internal structure diagram of an electronic device according to an embodiment of the present disclosure.

### DETAILED DESCRIPTION

The present disclosure will be further described in detail below in combination with the accompanying drawings and embodiments. It should be understood that the embodiments described below are merely intended to explain, rather than limit, the present disclosure. Further, it should be noted that for ease of description, only portions relevant to the present disclosure in question are shown in the accompanying drawings.

It should be noted that the embodiments of the present disclosure and features in the embodiments can be combined with each other without conflict. The present disclosure will be described in detail below with reference to the accompanying drawings and in conjunction with the embodiments.

The present disclosure generally relates to a vehicle field. The following embodiments of the present disclosure exemplarily illustrate a node address allocation method for a vehicle.

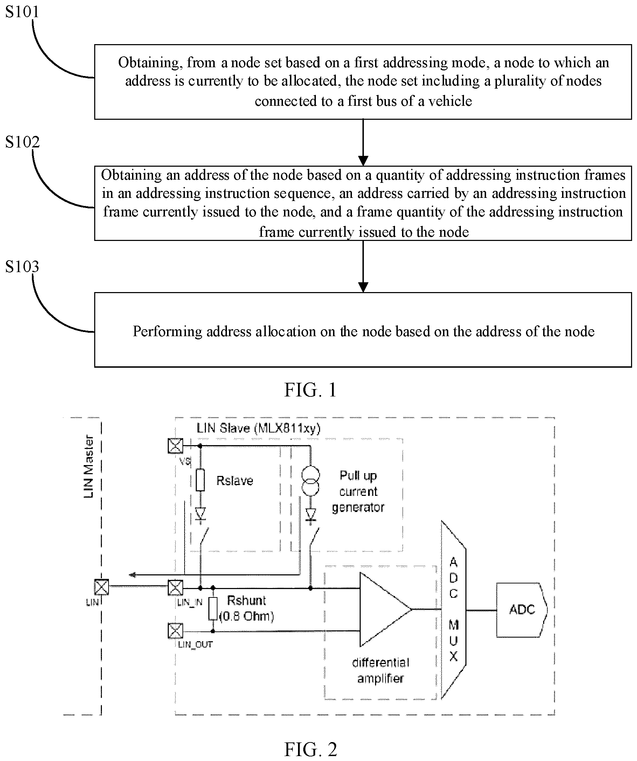

As illustrated in FIG. 1, the present disclosure provides a node address allocation method for a vehicle. The method includes operations at blocks.

At S101, a node to which an address is currently to be allocated is obtained from a node set based on a first addressing mode. The node set includes a plurality of nodes connected to a first bus of the vehicle.

In an exemplary embodiment of the present disclosure, a to-be-allocated node address is obtained from a set of all nodes based on a selected addressing mode. The set of nodes are all nodes connected to a bus of a current vehicle. For example, when the first bus of this vehicle is connected to three nodes, 3 to-be-allocated node address should also be provided. The address of the node may be 0x10, 0x0F, or 0x0E. A total quantity of nodes may be represented by Max NAD.

In some embodiments, the obtaining the node to which the address is currently to be allocated from the node set based on the first addressing mode includes: performing a node lookup sequentially from a head node to a tail node in the node set, and in response to finding a first to-be-processed node for which the address allocation has not been performed, determining the to-be-processed node as the node to which the address is currently to be allocated; or, performing the node lookup sequentially from the tail node to the head node in the node set, and in response to finding the first to-be-processed node for which the address allocation has not been performed, determining the to-be-processed node as the node to which the address is currently to be allocated.

In an exemplary embodiment of the present disclosure, a Max NAD is sent to perform allocation with a largest NAD, and the allocation is performed in a descending order. That is, a node lookup is performed from the head node to the tail node in the node set. When the node has not been allocated with an address, the to-be-processed node is determined as the node to which the address needs to be allocated currently. Alternatively, a node lookup is performed from the tail node to the head node in the node set. When the node has not been allocated with an address, the to-be-processed node is determined as the node to which the address needs to be allocated currently.

For example, in a Bus Shunt Method (BSM) addressing mode, a first LIN node at a far end is identified by determining a current difference through a pull up current generator. An NAD to-be-allocated instruction is responded from far to near. That is, the node lookup is performed from the tail node to the head node in the node set. Indie Realplum chips adopt an LIN Switch Method (LSM) addressing mode. That is, by controlling on and off of the LIN Switch, a quantity of online slave nodes is increased. Starting from a first LIN node at a near end, slave nodes at the rear end are connected one by one from near to far, and the NAD allocation instruction is responded. That is, the node lookup is performed from the head node to the tail node in the node set. An addressing instruction in this case is shown in Table 1.

**Table 1**

| **Sequ ence** | **ID** | **NAD** | **PCI** | **SID** | **D** | **D** | **D** | **D** | **D** | **Comment** |
|---|---|---|---|---|---|---|---|---|---|---|
| 1 | 3C | 7F | 06 | B5 | FF | 7F | 01 | 02 | FF | Enter in Auto-addressing procedure |
| 2 | 3C | 7F | 06 | B5 | FF | 7F | 02 | 02 | 0x10 | coding node 0x10 |
| 3 | 3C | 7F | 06 | B5 | FF | 7F | 02 | 02 | 0x0F | coding node 0x0F |
| 4 | 3C | 7F | 06 | B5 | FF | 7F | 02 | 02 | 0x0E | coding node 0x0E |
| 5 | 3C | 7F | 06 | B5 | FF | 7F | 02 | 02 | 0x0D | coding node 0x0D |
| 6 | 3C | 7F | 06 | B5 | FF | 7F | 02 | 02 | 0x0C | coding node 0x0C |
| 7 | 3C | 7F | 06 | B5 | FF | 7F | 02 | 02 | 0x0B | coding node 0x0B |
| 8 | 3C | 7F | 06 | B5 | FF | 7F | 02 | 02 | 0x0A | coding node 0x0A |
| 9 | 3C | 7F | 06 | B5 | FF | 7F | 02 | 02 | 0x09 | coding node 0x09 |
| 10 | 3C | 7F | 06 | B5 | FF | 7F | 02 | 02 | 0x08 | coding node 0x08 |
| 11 | 3C | 7F | 06 | B5 | FF | 7F | 02 | 02 | 0x07 | coding node 0x07 |
| 12 | 3C | 7F | 06 | B5 | FF | 7F | 02 | 02 | 0x06 | coding node 0x06 |
| 13 | 3C | 7F | 06 | B5 | FF | 7F | 02 | 02 | 0x05 | coding node 0x05 |
| 14 | 3C | 7F | 06 | B5 | FF | 7F | 02 | 02 | 0x04 | coding node 0x04 |
| 15 | 3C | 7F | 06 | B5 | FF | 7F | 02 | 02 | 0x03 | coding node 0x03 |
| 16 | 3C | 7F | 06 | B5 | FF | 7F | 02 | 02 | 0x02 | coding node 0x02 |
| 17 | 3C | 7F | 06 | B5 | FF | 7F | 02 | 02 | 0x01 | coding node 0x01 |
| 18 | 3C | 7F | 06 | B5 | FF | 7F | 03 | 02 | 0x0FF | Save information in NVRAM |
| 19 | 3C | 7F | 06 | B5 | FF | 7F | 04 | 02 | 0x0FF | Exit from Auto-addressing procedure |

In some embodiments, the first addressing mode is one of an LSM addressing mode or a BSM addressing mode.

In an exemplary embodiment of the present disclosure, existing automatic addressing is mostly controlled by using Melexis MLX81 series chips or the Indie Realplum chips through LIN communication. The MLX81 series chips adopt the BSM addressing mode. That is, the first LIN node at the far end is identified by determining the current difference through the pull up current generator. The NAD allocation instruction is responded from far to near. The Indie Realplum chips adopt the LSM addressing mode. That is, by controlling the on and the off of the LIN Switch, the quantity of online slave nodes is increased. Starting from the first LIN node at the near end, the slave nodes at the rear end are connected one by one from near to far, and the NAD allocation instruction is responded.

An internal structure of the MLX81 series chip is illustrated in FIG. 2. By switching on the constant flow source (Rslave) and the pull up current generator to realize current detection, LIN bus BSM automatic address allocation can be realized. The main steps are as follows:
1. The pull up current generator and the Rslave are switched off;
2. A current value and a current offset are tested;
3. The pull up current generator is switched on;
4. A current value is tested at this time as a pre-selected measurement. A node whose current value is smaller than a predetermined current value enters a final measurement. The predetermined current value is: 1.2 mA;
5. The Rslave is switched on;
6. The current value is tested at this time, and is used as a final measurement value;
7. The pull up current generator and the Rslave are switched off.

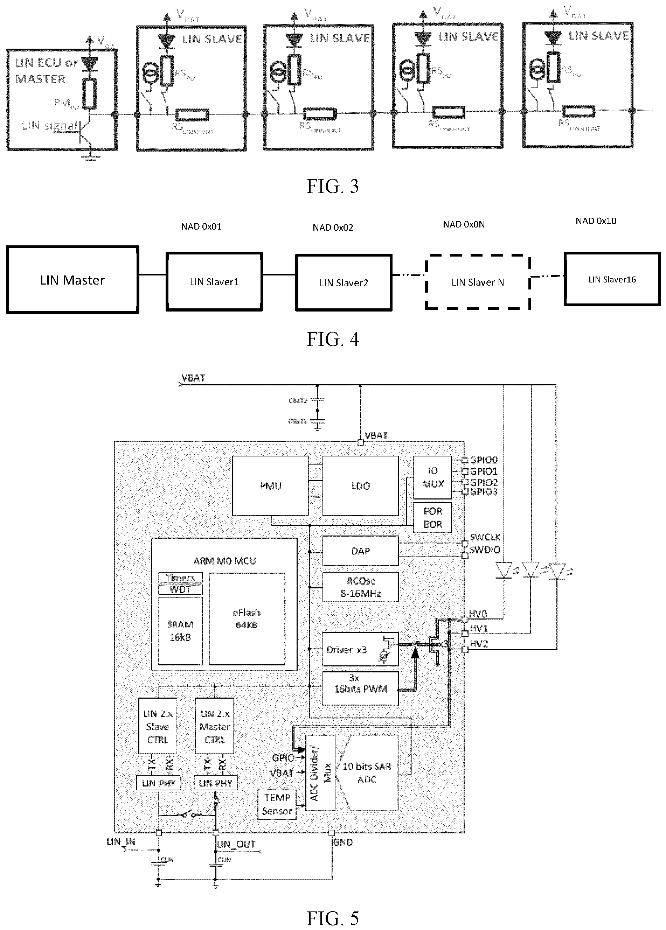

In this case, all LIN nodes are serially connected through daisy chain, as illustrated in FIG. 3. When testing the current value, the pull up current generator is switched on to perform the pre-measurement. When the tested current value is greater than the predetermined current value, the node is determined not to be the last node, and thus the pull up current generator needs to be switched off. When the node whose current value is smaller than the predetermined current value enters the final measurement, Rslave is switched on to test the current value at this time, and whether the current value is greater than the predetermined current value is determined. When the current value at this time is smaller than the predetermined value, the node is determined to be the last node, and NAD address allocation is performed. The predetermined current value is: 1.2 mA. After addressing in the BSM mode, the node address is illustrated in FIG. 4.

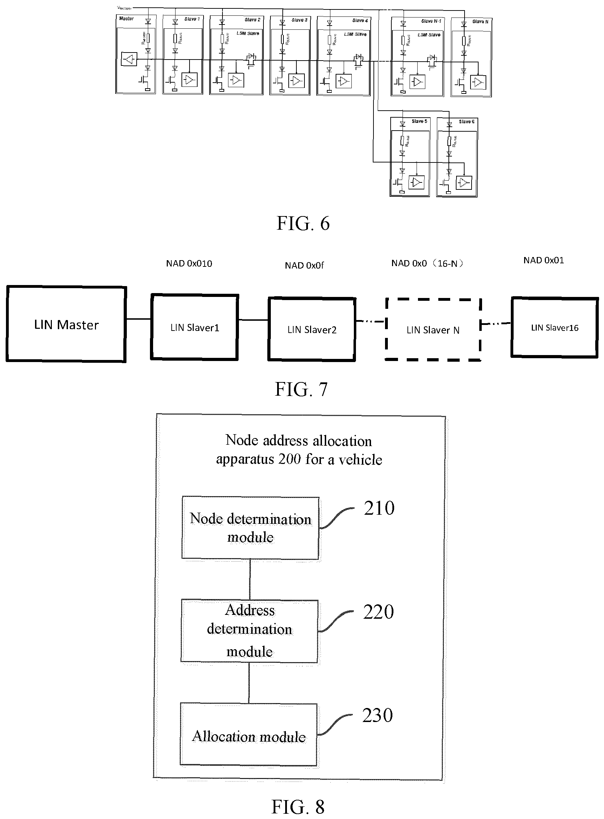

The Indie Realplum chip adopts the LSM addressing mode. An internal structure of the chip for LIN nodes is illustrated in FIG. 5. An LSM addressing node connection diagram of the chip is illustrated in FIG. 6. A next LIN node is connected through an LIN switch inside a node. Then, by determining whether the NAD is an initial value to identify whether the address has been allocated, and a new NAD will cover the old one for a node when identifying the node that has not been allocated with the NAD. In this way, the LIN bus automatic address allocation can be realized. The steps are as follows:
1. The LIN switch is switched off for all nodes. A first node at the near end is online. After receiving an NAD instruction and covering the old one with the new NAD, the LIN switch is switched on for this node and a second node is connected;
2. After receiving the NAD allocation instruction, the first node has stored the new NAD. The second node has an initial NAD, and the new NAD covers the old one for this node. The LIN switch is switched on for this node and a third node is connected;
3. NADs are allocated to all nodes. After addressing in the LSM mode, the node address is illustrated in FIG. 7.

At S102, an address of the node is obtained based on a quantity of addressing instruction frames in an addressing instruction sequence, an address carried by an addressing instruction frame currently issued to the node, and a frame quantity of the addressing instruction frame currently issued to the node.

In an exemplary embodiment of the present disclosure, the address of the node is obtained based on the quantity of addressing instruction frames in a current addressing sequence, the address carried by the addressing instruction, and a frame quantity of the current addressing instruction frame. A quantity of addresses can be expressed as the Max NAD.

For example, a first NAD allocation instruction frame with NAD being 0xX (Max NAD) is received. All nodes store the NAD being 0xX, where X is a quantity of addressing instruction frames in the addressing instruction sequence, and the LIN switch is switched off. All LIN switches are disconnected, and at this time, only the first node at the near end is online. A second NAD allocation instruction frame with NAD being 0x0 (X-1) is received. This node stores the NAD with Ox01 {Max NAD-(X-1)}, and the LIN switch is switched on and the second node is connected. The LIN switch for the first node is switched on, and at this time, a first node and a second node at the near end are online. The first node has NAD being Ox01, and the second node has NAD being 0xX. A NAD allocation instruction with NAD being 0x (X-2) is received. The node with NAD being 0xX is corrected to have NAD being 0x02 {Max NAD-(X-2)}, and the LIN switch for the second node is switched on and the third node is connected. The LIN switches for the first node and the second node are switched on, and at this time, three nodes at the near end are online. The first node has NAD being Ox01, the second node has NAD being 0x02, and the third node has NAD being 0xX. A NAD allocation instruction with NAD being 0x (X-3) is received. The node with NAD being 0xX is corrected to have NAD being 0x03 {Max NAD-(X-3)}, and the LIN switch for the second node is switched on. Until allocating to the last node, a second node at the far end is connected and online. A NAD allocation instruction with NAD being Ox01 is received. The node with NAD being 0xX is corrected to have NAD being 0x (X-1), and the LIN switch for this node is switched on. A first node at the far end is online, and this node has stored NAD being 0xX.

In some embodiments, the obtaining the address of the node based on the quantity of addressing instruction frames in the addressing instruction sequence, the address carried by the addressing instruction frame currently issued to the node, and the frame quantity of the addressing instruction frame currently issued to the node includes: obtaining a first difference between the quantity of addressing instruction frames in the addressing instruction sequence and the frame quantity of the addressing instruction frame currently issued to the node; obtaining a second difference between the address carried by the addressing instruction frame currently issued to the node and the first difference; and obtaining the address of the node based on the second difference.

In an exemplary embodiment of the present disclosure, when the quantity of addressing instruction frames in the addressing instruction sequence is 5 and the frame quantity of the addressing instruction frame currently issued to the node is 3, a difference is calculated as 2, and the current difference is the first difference. A difference is calculated as 3 based on the address carried by the addressing instruction frame being 5 and the first difference being 2, and the current difference is the second difference. Based on the second difference, the address of the node is obtained as NAD 0x03.

At S103, address allocation is performed on the node based on the address of the node.

In an exemplary embodiment of the present disclosure, the address allocation is performed on the node based on the address of the node, and the obtained address of each node is as illustrated in FIG. 4. In such a manner, nodes in the LSM addressing mode and the BSM addressing mode are the same, and thus compatibility control is realized.

In some embodiments, the node address allocation method further includes: obtaining, from the node set based on a second addressing mode, the node to which the address is currently to be allocated; obtaining the address of the node based on the address carried by the addressing instruction frame currently issued to the node in the addressing instruction sequence; and performing the address allocation on the node based on the address of the node.

In an exemplary embodiment of the present disclosure, the node to which the address is currently allocated is obtained from the node set based on a second addressing mode. The address carried by the addressing instruction frame currently issued to the node is directly taken as the address of the node. For example, when the node to which the address is currently to be allocated is 3, the obtained address of the node is 0x03.

In some embodiments, the second addressing mode is one of an LSM addressing mode or a BSM addressing mode, and the second addressing mode is different from the first addressing mode.

In an exemplary embodiment of the present disclosure, when the first addressing mode is the LSM addressing mode, the second addressing mode is the BSM addressing mode. When the second addressing mode is the BSM addressing mode, the first addressing mode is the LSM addressing mode. Correspondence between the first addressing mode and the second addressing mode is adopted, allowing that NADs obtained though the two addressing modes are consistent, realizing the compatibility control.

In summary, with the node address allocation method for the vehicle according to the present disclosure, the address of the node is obtained by obtaining the quantity of addressing instruction frames in an addressing instruction sequence, the address carried by the addressing instruction frame currently issued to the node, and the frame quantity of the addressing instruction frame currently issued to the node. This method can realize accurate control on the address allocation on the node, meeting predetermined requirements.

Further, FIG. 8 illustrates a schematic diagram of a node address allocation apparatus for a vehicle according to an embodiment of the present disclosure. As illustrated in FIG. 8, a node address allocation apparatus 200 for a vehicle includes a node determination module 210, an address determination module 220, and an allocation module 230.

The node determination module 210 is configured to obtain, from a node set based on a first addressing mode, a node to which an address is currently to be allocated. The node set includes a plurality of nodes connected to a first bus of the vehicle.

The address determination module 220 is configured to obtain an address of the node based on a quantity of addressing instruction frames in an addressing instruction sequence, an address carried by an addressing instruction frame currently issued to the node, and a frame quantity of the addressing instruction frame currently issued to the node.

The allocation module 230 is configured to perform address allocation on the node based on the address of the node.

In some embodiments, the address determination module 220 is specifically configured to: obtain a first difference between a quantity of addressing instruction frames in the addressing instruction sequence and the frame quantity of the addressing instruction frame currently issued to the node; obtain a second difference between the address carried by the addressing instruction frame currently issued to the node and the first difference; and obtain the address of the node based on the second difference.

In summary, with the node address allocation apparatus for the vehicle according to the present disclosure, the address of the node is obtained by obtaining the quantity of addressing instruction frames in the addressing instruction sequence, the address carried by the addressing instruction frame currently issued to the node, and the frame quantity of the addressing instruction frame currently issued to the node. This method can realize accurate control on the address allocation on the node, meeting predetermined requirements.

For several modules or units mentioned in the above detailed description, this division is not mandatory. In practice, according to the embodiments of the present disclosure, features and functions of two or more modules or units described above may be embodied in one module or unit. Conversely, features and functions of one module or unit described above may be further divided into a plurality of modules or units embodied.

Flowcharts and block diagrams in the drawings illustrate architecture, functionality, and operational instructions of possible implementations of systems, methods, and computer program products in accordance with various embodiments of the present disclosure. In this regard, each block in the flowchart or the block diagram may represent a module, a program segment, or portion of a code that contains one or more executable instructions for implementing a specified logical function. It should also be noted that in some alternative implementations, the functions noted in the blocks may also occur in a different order than those noted in the drawings. For example, two connected representations of blocks may actually be executed substantially in parallel. Sometimes, they may be executed in a reverse order, depending on the function involved. It should also be noted that each block in the block diagrams and/or the flowcharts, and combinations of blocks in the block diagrams and/or the flowcharts may be implemented with a dedicated hardware-based system that performs specified functions or operational instructions, or may be implemented with a combination of dedicated hardware and computer instructions. The above description is only an explanation of preferred embodiments of the present disclosure and technical principles employed. It is conceivable for those skilled in the art that a scope of disclosure in the present disclosure is not limited to technical solutions formed by specific combinations of the above-described technical features, and should also cover other technical solutions formed by arbitrary combinations of the above-described technical features or their equivalents without departing from the concept of the above-described disclosure. For example, the above-mentioned features can be interchangeable with technical features disclosed in the present disclosure and having similar functions to form alternative technical solutions.

In one embodiment, the present disclosure provides a vehicle adopting the node address allocation apparatus 200 of the vehicle. The node address allocation apparatus 200 of the vehicle includes: the node determination module 210 configured to obtain, from the node set based on the first addressing mode, the node to which the address is currently to be allocated, the node set including the plurality of nodes connected to the first bus of the vehicle; the address determination module 220 configured to obtain the address of the node based on the quantity of addressing instruction frames in an addressing instruction sequence, the address carried by the addressing instruction frame currently issued to the node, and the frame quantity of the addressing instruction frame currently issued to the node; and the allocation module 230 configured to perform the address allocation on the node based on the address of the node.

In some embodiments, the address determination module 220 is specifically configured to: obtain the first difference between the quantity of addressing instruction frames in the addressing instruction sequence and the frame quantity of the addressing instruction frame currently issued to the node; obtain the second difference between the address carried by the addressing instruction frame currently issued to the node and the first difference; and obtain the address of the node based on the second difference.

In summary, with the vehicle according to the present disclosure, the address of the node is obtained by obtaining the quantity of addressing instruction frames in the addressing instruction sequence, the address carried by the addressing instruction frame currently issued to the node, and the frame quantity of the addressing instruction frame currently issued to the node. This method can realize accurate control on the address allocation on the node, meeting predetermined requirements.

In one embodiment, an electronic device is provided. The electronic device includes a memory, a processor, and a computer program stored on the memory and executable on the processor. The electronic device is configured to, when executing the computer program, implement: obtaining, from the node set based on the first addressing mode, the node to which the address is currently to be allocated, the node set including the plurality of nodes connected to the first bus of the vehicle; obtaining the address of the node based on the quantity of addressing instruction frames in the addressing instruction sequence, the address carried by the addressing instruction frame currently issued to the node, and the frame quantity of the addressing instruction frame currently issued to the node; and performing the address allocation on the node based on the address of the node.

In one embodiment, the processor is configured to, when executing the computer program, further implement: performing the node lookup sequentially from the head node to the tail node in the node set, and in response to finding the first to-be-processed node for which the address allocation has not been performed, determining the to-be-processed node as the node to which the address is currently to be allocated; or, performing the node lookup sequentially from the tail node to the head node in the node set, and in response to finding the first to-be-processed node for which the address allocation has not been performed, determining the to-be-processed node as the node to which the address is currently to be allocated.

In one embodiment, the processor is configured to, when executing the computer program, further implement: obtaining the first difference between the quantity of addressing instruction frames in the addressing instruction sequence and the frame quantity of the addressing instruction frame currently issued to the node; obtaining the second difference between the address carried by the addressing instruction frame currently issued to the node and the first difference; and obtaining the address of the node based on the second difference.

In one embodiment, the processor is configured to, when executing the computer program, further implement: obtaining, from the node set based on the second addressing mode, the node to which the address is currently to be allocated; obtaining the address of the node based on the address carried by the addressing instruction frame currently issued to the node in the addressing instruction sequence; and performing the address allocation on the node based on the address of the node.

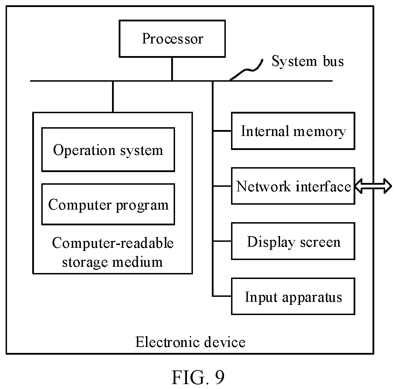

The electronic device may be a terminal device, and an internal structure diagram thereof may be as illustrated in FIG. 9. The terminal device includes a processor, a memory, a communication interface, a display screen, and an input apparatus connected by a system bus. The processor of the terminal device is used to provide computing and control capabilities. The memory of the terminal device includes a computer-readable storage medium and an internal memory. The computer-readable storage medium stores an operation system and the computer program. The internal memory provides an environment for operation of the operation system and the computer program in the computer-readable storage medium. The communication interface of the terminal device is used for wired or wireless communication with external terminals. Wireless communication can be realized through WIFI, operator network, near field communication (NFC), or other technologies. The computer program is configured to, when executed by the processor, implement an application opening method. The display screen of the terminal device may be a liquid crystal display screen or a communication ink display screen. The input apparatus of the terminal device may be a touch layer covered at the display screen, and may also be a key, a trackball, or a touch pad arranged at an outer housing of the terminal device, or may further be an external keyboard, a touch pad, or a mouse.

In summary, with the electronic device according to the present disclosure, the address of the node is obtained by obtaining the quantity of addressing instruction frames in the addressing instruction sequence, the address carried by the addressing instruction frame currently issued to the node, and the frame quantity of the addressing instruction frame currently issued to the node. This method can realize accurate control on the address allocation on the node, meeting predetermined requirements.

In one embodiment, a computer-readable storage medium has a computer program stored thereon. The computer program is configured to, when executed by a processor, implement: obtaining, from the node set based on the first addressing mode, the node to which the address is currently to be allocated, the node set including the plurality of nodes connected to the first bus of the vehicle; obtaining the address of the node based on the quantity of addressing instruction frames in the addressing instruction sequence, the address carried by the addressing instruction frame currently issued to the node, and the frame quantity of the addressing instruction frame currently issued to the node; and performing the address allocation on the node based on the address of the node.

In one embodiment, the processor is configured to, when executing the computer program, further implement: performing the node lookup sequentially from the head node to the tail node in the node set, and in response to finding the first to-be-processed node for which the address allocation has not been performed, determining the to-be-processed node as the node to which the address is currently to be allocated; or, performing the node lookup sequentially from the tail node to the head node in the node set, and in response to finding the first to-be-processed node for which the address allocation has not been performed, determining the to-be-processed node as the node to which the address is currently to be allocated.

In one embodiment, the processor is configured to, when executing the computer program, further implement: obtaining the first difference between the quantity of addressing instruction frames in the addressing instruction sequence and the frame quantity of the addressing instruction frame currently issued to the node; obtaining the second difference between the address carried by the addressing instruction frame currently issued to the node and the first difference; and obtaining the address of the node based on the second difference.

In one embodiment, the processor is configured to, when executing the computer program, further implement: obtaining, from the node set based on the second addressing mode, the node to which the address is currently to be allocated; obtaining the address of the node based on the address carried by the addressing instruction frame currently issued to the node in the addressing instruction sequence; and performing the address allocation on the node based on the address of the node.

In summary, with the computer-readable storage medium according to the present disclosure, the address of the node is obtained by obtaining the quantity of addressing instruction frames in the addressing instruction sequence, the address carried by the addressing instruction frame currently issued to the node, and the frame quantity of the addressing instruction frame currently issued to the node. This method can realize accurate control on the address allocation on the node, meeting predetermined requirements.

It is conceivable for those skilled in the art that implementing all or part of the processes in the methods of the above embodiments can be accomplished by instructing related hardware by the computer program. The computer program can be stored in the computer-readable storage medium. When executed, the computer program can include the processes of the embodiments of the methods described above. Any reference to the memory, a database, or other medium used in the embodiments provided herein may include at least one of the computer-readable storage medium and a computer-unreadable storage medium. A computer-readable memory may include a Read-Only Memory (ROM), a magnetic tape, a floppy disk, a flash memory, an optical memory, or the like. A volatile memory may include a Random Access Memory (RAM) or an external cache memory. As illustration instead of limitation, RAM is available in a variety of forms, such as a Static Random Access Memory (SRAM), a Dynamic Random Access Memory (DRAM), or the like.

It should be understood that, the orientation or the position indicated by terms such as "length," "width," "over," "below," "front," "rear," "left," "right," "vertical," "horizontal," "top," "bottom," "inner," and "outer" should be construed to refer to the orientation and the position as shown in the drawings, and is only for the convenience of describing the present disclosure and simplifying the description, rather than indicating or implying that the pointed device or element must have a specific orientation, or be constructed and operated in a specific orientation, and therefore cannot be understood as a limitation of the present disclosure.

In addition, terms such as "first", "second" are only used for descriptive purposes, and cannot be understood as indicating or implying relative importance or implicitly indicating the number of indicated technical features. Therefore, the features associated with "first" and "second" may explicitly or implicitly include one or more of the features. In the description of the present disclosure, "plurality" means two or more, unless otherwise specifically defined.

Unless otherwise defined, technical and scientific terms used herein have the same meaning as is commonly understood by those skilled in the art of the present disclosure. The terms used herein are for the purpose of describing particular implementations only and are not intended to limit the present disclosure. Terms such as "provide" throughout this specification may mean that one member is attached to another member either directly or through an intermediate member. Throughout this specification, a feature described in one embodiment may be applied in another embodiment alone or in combination with other features, unless the feature is inapplicable in the other embodiment or otherwise indicated.

The present disclosure has been described by way of the above embodiments, but it should be understood that the above embodiments are for purposes of example and illustration only and are not intended to limit the present disclosure to a scope of the described embodiments. It is conceivable for those skilled in the art that more variations and modifications can be made in accordance with the teachings of the present disclosure and fall within the protect scope of the present disclosure.

## Claims

1. A node address allocation method for a vehicle, wherein the method comprises:
obtaining, from a node set based on a first addressing mode, a node to which an address is currently to be allocated, the node set comprising a plurality of nodes connected to a first bus of the vehicle;
obtaining an address of the node based on a quantity of addressing instruction frames in an addressing instruction sequence, an address carried by an addressing instruction frame currently issued to the node, and a frame quantity of the addressing instruction frame currently issued to the node; and
performing address allocation on the node based on the address of the node.

2. The node address allocation method according to claim 1, wherein said obtaining, from the node set based on the first addressing mode, the node to which the address is currently to be allocated comprises:
performing a node lookup sequentially from a head node to a tail node in the node set, and
in response to finding a first to-be-processed node for which the address allocation has not been performed, determining the to-be-processed node as the node to which the address is currently to be allocated;
or,
performing the node lookup sequentially from the tail node to the head node in the node set, and
in response to finding the first to-be-processed node for which the address allocation has not been performed, determining the to-be-processed node as the node to which the address is currently to be allocated.

3. The node address allocation method according to claim 2, wherein the first addressing mode is one of an LSM addressing mode or a BSM addressing mode.

4. The node address allocation method according to any one of claims 1 to 3, wherein said obtaining the address of the node based on the quantity of addressing instruction frames in the addressing instruction sequence, the address carried by the addressing instruction frame currently issued to the node, and the frame quantity of the addressing instruction frame currently issued to the node comprises:
obtaining a first difference between the quantity of addressing instruction frames in the addressing instruction sequence and the frame quantity of the addressing instruction frame currently issued to the node;
obtaining a second difference between the address carried by the addressing instruction frame currently issued to the node and the first difference; and
obtaining the address of the node based on the second difference.

5. The node address allocation method according to claim 1, further comprising:
obtaining, from the node set based on a second addressing mode, the node to which the address is currently to be allocated;
obtaining the address of the node based on the address carried by the addressing instruction frame currently issued to the node in the addressing instruction sequence; and
performing the address allocation on the node based on the address of the node.

6. The node address allocation method according to claim 5, wherein the second addressing mode is one of an LSM addressing mode or a BSM addressing mode, and the second addressing mode is different from the first addressing mode.

7. A node address allocation apparatus for a vehicle, wherein the apparatus comprises:
a node determination module configured to obtain, from a node set based on a first addressing mode, a node to which an address is currently to be allocated, the node set comprising a plurality of nodes connected to a first bus of the vehicle;
an address determination module configured to obtain an address of the node based on a quantity of addressing instruction frames in an addressing instruction sequence, an address carried by an addressing instruction frame currently issued to the node, and a frame quantity of the addressing instruction frame currently issued to the node; and
an allocation module configured to perform address allocation on the node based on the address of the node.

8. The node address allocation apparatus for the vehicle according to claim 7, wherein the address determination module is specifically configured to:
obtain a first difference between a quantity of addressing instruction frames in the addressing instruction sequence and the frame quantity of the addressing instruction frame currently issued to the node;
obtain a second difference between the address carried by the addressing instruction frame currently issued to the node and the first difference; and
obtain the address of the node based on the second difference.

9. A vehicle, comprising the node address allocation apparatus for the vehicle according to claim 7 or 8.

10. An electronic device, comprising:
a memory;
a processor; and
a computer program stored on the memory and executable on the processor, wherein the processor is configured to, when executing the program, implement the node address allocation method for the vehicle according to any one of claims 1 to 6.

11. A computer-readable storage medium having a computer program stored thereon, wherein the program is configured to, when executed by a processor, implement the node address allocation method for the vehicle according to any one of claims 1 to 6.
